# NEUE EUROPÄISCHE PATENTSCHRIFT

(11) **EP 0 432 388 B2**
(45) Veröffentlichungstag und Bekanntmachung des Hinweises auf die Entscheidung über den Einspruch: **29.10.1997**
(45) Hinweis auf die Patenterteilung: 16.02.1994
(21) Anmeldenummer: 90118594.2
(22) Anmeldetag: 27.09.1990
(51) Int. Cl.: F04C 2/344, F04C 13/00

(54) **Flügelzellenpumpe zum Fördern von pasteusen Massen, insbesondere von Wurstbrät**
Vane pump for the transport of pasty masses, in particular sausage mince
Pompe à palettes pour le transport des masses pâteuses, en particulier de pâte à saucissons

(30) Priorität: 14.12.1989 DE 8914705 U
(43) Veröffentlichungstag der Anmeldung: 19.06.1991
(73) Patentinhaber: ALBERT HANDTMANN Maschinenfabrik GmbH & Co. KG, D-88396 Biberach (DE)
(72) Erfinder: Staudenrausch, Georg, D-7950 Biberach/Riss 1 (DE)
(74) Vertreter: Grünecker, Kinkeldey, Stockmair & Schwanhäusser Anwaltssozietät

(56) Entgegenhaltungen:
- DE-A- 2 922 710
- FR-A- 615 897
- FR-A- 2 338 399
- FR-A- 2 570 131

## Beschreibung

Die Erfindung betrifft eine Flügelzellenpumpe zum Fördern von pasteusen Massen insbesondere von Wurstbrät nach dem Oberbegriff des Anspruchs 1.

Solche Flügelzellenpumpen zum Fördern von Wurstbrät können z.B. als Dosieraggregat in einer Vorsatzabteilmaschine oder als Förderstromteiler oder als Befüllpumpe, aber auch als Bestandteil eines Vakuumfüllers dienen.

Eine solche Flügelzellenpumpe ist durch die deutsche Patentschrift DE-B-16 53 843 bekannt. Dort ist im Innenbereich des Rotors eine Nocke undrehbar, aber radial verschiebbar angeordnet, auf welcher sich die Flügel mit Ihrem in den Rotor ragenden Teil abstützen. Der Nocken ist mit Hilfe einer radialen Schlitzführung und einer Schrägfläche nach außen preßbar. Er drückt dabei im Druckbereich der Pumpe auf den hinteren Teil der vorbeistreichenden Flügel, die so in diesem Bereich mit ihrer Vorderkante gegen die Wandung des Pumengehäuses gepreßt werden, um eine verbesserte Abdichtwirkung herbeizuführen.

Diese bekannte Flügelzellenpumpe weist einen komplizierten und großen baulichen Aufwand auf. Außerdem ist ein sehr genaues radiales Einstellen und Nachstellen der Flügel nicht möglich.

Der Erfindung liegt die Aufgabe zugrunde, eine solche Flügelzellenpumpe so auszubilden, daß mit einfachen baulichen Mitteln ein verbesserter Wirkungsgrad erzielt werden kann.

Diese Aufgabe wird durch die kennzeichnenden Merkmale des Hauptanspruchs gelöst.

Es ergibt sich eine einfache Bauweise der Flügelzellenpumpe, weil alle für die Funktion wesentlichen Konturen in einem einzigen Teil liegen, nämlich im Pumpengehäuse.

Aus der DE-A- 26 01 347 ist eine Pumpe insbesondere zur Förderung von Zement beton bekannt, bei der zwischen Einlaufseite und Auslaufseite ein Absperrkörper angeordnet ist, der Dichtmanschetten aufweist, die in radialer Richtung verstellbar sind. Diese Dichtmanschetten wirken auf die innere Begrenzungswand des Förderkanals. Bei der Erfindung wirkt das Druckstück dagegen auf die Flügel.

Die Einstellung und Nachstellung der Flügel kann von außen erfolgen und zwar mit sehr hoher Genauigkeit.

Vorteilhaft ist ferner, daß sich mit Rücksicht auf die durchgehenden Flügel nur zwei Reibflächen ergeben. Außerdem erfahren die durchgehenden Flügel eine wesentlich stabilere Lagerung, so daß eine Kippneigung ausgeschaltet ist.

Wenn die Flügelzellenpumpe als Bestandteil eines Vakuumfüllers vorgesehen ist, so kann in der Wandung des Gehäuses der Pumpe eine Vakuumöffnung so angeordnet werden, daß sich ein Anstellen der Flügel sowohl im Druckbereich als auch im Vakuumbereich auswirkt.

Weitere Merkmale und Vorteile der Erfindung ergeben sich aus der nachfolgenden Beschreibung in Verbindung mit der Zeichnung, in welcher ein Ausführungsbeispiel des Vakuumfüllers schematisch dargestellt ist.

Dabei zeigen:
- Figur 1: einen teilweisen Vertikalschnitt durch einen Vakuumfüller mit der Flügelzellenpumpe,
- Figur 2: einen Radialschnitt durch die Flügelzellenpumpe,
- Figur 3: dazu einen Axialschnitt und
- Figur 4: die Pumpenflügel in einer auseinandergezogenen Darstellung.

Im Ausführungsbeispiel ist die Flügelzellenpumpe als Bestandteil eines Väkuumfüllers dargestellt.

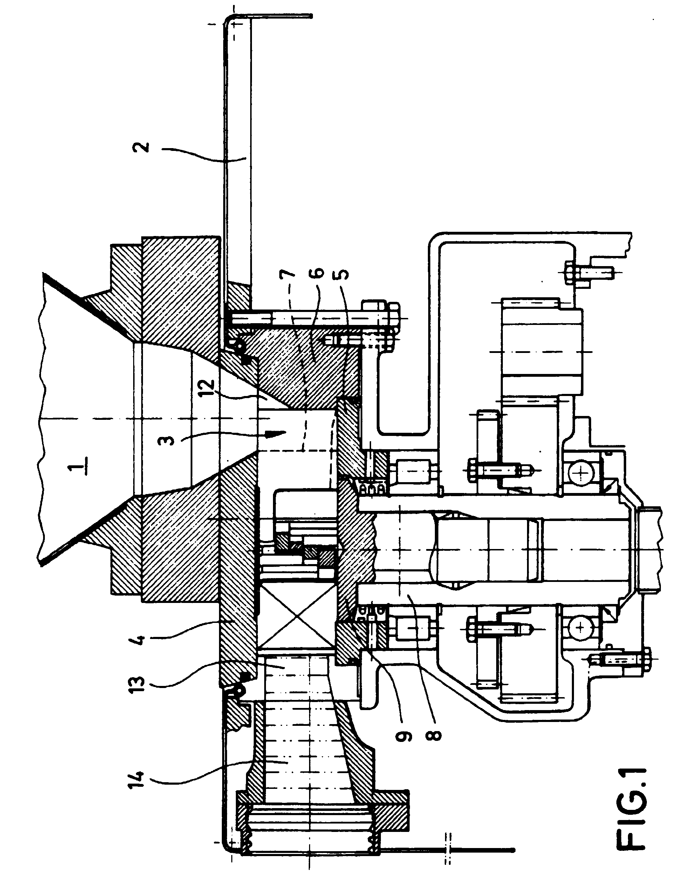

Wie aus Figur 1 ersichtlich, weist der Vakuumfüller einen Fülltrichter 1 auf, der auf der Oberseite des Maschinengehäuses 2 angeordnet ist

Im Maschinengehäuse 2 ist unterhalb des Fülltrichters 1 die insgesamt mit 3 bezeichnete Flügelzellenpumpe angeordnet.

Der Innenraum der Flügelzellenpumpe 3 wird begrenzt durch eine Deckplatte 4 sowie eine Bodenplatte 5 und eine Gehäusewand 6. Im Inneren der Flügelzellenpumpe 3 ist ein Rotor 7 exzentrisch gelagert, der durch eine im Maschinengehäuse 2 gelagerte, mit der Antriebswelle 29 des Rotors formschlüssig verbundene, polygonale Antriebshülse 8 in Drehung versetzt wird. Die Antriebswelle 29 weist eine Platte 9 auf, welche als Bestandteil des Rotors 7 einen Teil des Bodens des Pumpengehäuses bildet.

Im ringförmig ausgebildeten Rotor 7 sind Radialschlitze eingearbeitet, in welchen die Pumpenflügel 10a bis 10e radial verschiebbar gelagert sind.

Die Enden jedes Pumpenflügels gleiten während ihrer Drehbewegung an der Innenwandung 11 der Pumpengehäusewand 6 entlang. Dabei bilden die Pumpenflügel zusammen mit derAußenwand des Rotors 7 sowie der Innenwand 11 der Pumpengehäusewand 6 und mit der Deckplatte 4 und der Bodenplatte 5 Förderzellen, die sich bei ihrem Umlauf im Volumen ändern. Diese Volumenänderungen werden durch die Kontur der Innenwand 11 bestimmt.

In der Gehäusewand 6 ist ein Bräteinlaß 12 und ein Brätauslaß 13 vorgesehen.

Der Bräteinlaß 12 steht mit dem Auslauf des Fülltrichters 1 in Verbindung. Der Brätauslaß 13 führt zu einem Auslaufrohr 14, an welches sich beispielsweise eine Abdrehvorrichtung (nicht gezeichnet) anschließen kann.

Die Förderzellen weisen im Bereich des Bräteinlasses 12 ihr größtes Volumen auf.

An den Bräteinlaß 12 schließt sich - in Drehrichtung gesehen - ein Druckbereich 15 an, in welchem sich die Förderzellen in ihrem Volumen verkleinern.

An den Druckbereich 15 schließt sich - wieder im Drehrichtung des Rotors gesehen - der Brätauslaß 13 an. Dem Druckbereich 15 gegenüber ist in der Gehäusewandung 6 eine Ausnehmung 16 eingearbeitet, in welcher ein Druckstück 17 angeordnet ist. Das Druckstück 17 weist auf seiner, den Pumpenflügeln 10a bis e zugewandten Fläche eine Kontur 18 auf, welche die Kontur der Innenwand 11 der Pumpengehäusewand 6 so ersetzt, daß die Kontur 18 in die Kontur der Innenwand der Pumpengehäusewand 6 übergeht.

In der Gehäusewand 6 sind zwei Druckschrauben 19 vorgesehen, die mit ihrem vorderen Ende auf das Druckstück 17 drücken und dieses gegen die Pumpenflügel 10a bis e anstellen.

Das Druckstück 17 kann an seinen sich an die Kontur der Innenwandung 11 der Pumpengehäusewand 6 anschließenden Enden mit flachen Fasen versehen sein (nicht gezeichnet), so daß beim Nachstellen des Druckstückes praktisch keine Stufen entstehen, wobei ein Nachstellen nur in einem Bereich eines Bruchteils eines Millimeters erfolgt.

Im Bereich des Druckstückes 16 befindet sich eine Vakuumöffnung 20, die mit einer Vakuumquelle in Verbindung steht. Dadurch ergibt sich im Bereich des Druckstückes 16 ein strichpunktiert angedeuteter Vakuumbereich 21. Das Druckstück 17 erstreckt sich im gezeichneten Beispiel über einen Bereich von etwa drei Pumpenflügeln 10b, 10c und 10d.

Die Kontur 18 des Druckstückes 16 ist so ausgebildet, daß der Abstand zu der radial gegenüberliegenden Kontur der Innenwand 11 der Länge eines Pumpenflügels entspricht, wenn das Druckstück 17 genau angestellt ist, sei es bei einer neuen Pumpe zum erstmaligen Einstellen, sei es bei einer gebrauchten Pumpe zum Ausgleich von Abnützungen.

Durch das Einstellen bzw. Nachstellen des Druckstückes 17, das auf einfache Art und Weise von außen erfolgen kann, wird der entsprechende Flügel gleichzeitig auch an der gegenüberliegenden Kontur, d.h. im Druckbereich 15, angestellt, weil jeder durchgehende Pumpenflügel 10a bis 10e im Rotor axial verschiebbar gelagert ist. Auf diese Art und Weise wird somit die Abdichtwirkung der Flügel nicht nur im Druckbereich 15, sondern gleichzeitig auch im Vakuumbereich 21 wesentlich verbessert, so daß einerseits der volumetrische Wirkungsgrad der Pumpe erhöht und damit die Gewichtsgenauigkeit verbessert und die Fördermenge konstant gehalten wird, während andererseits sich praktisch keine Masse-Rückströmung im Vakuumbereich ergibt, so daß die Evakuierung der Brätmasse optimal erfolgt.

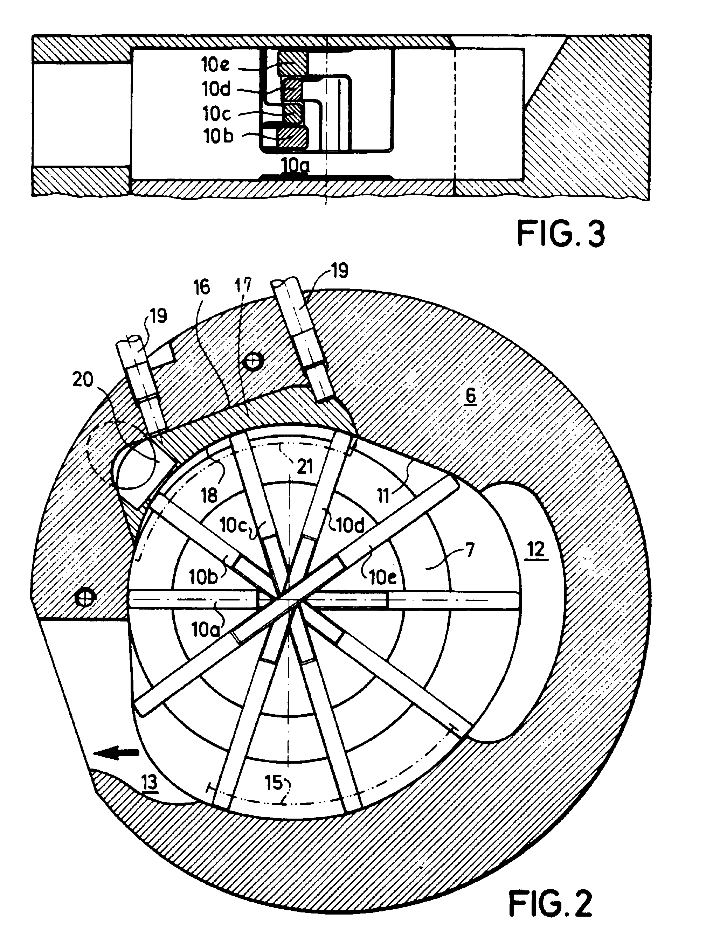

Damit sich die durchgehenden Flügel 10a bis 10e im Zentrum des Rotors nicht stören, sind sie in ihrem Mittenbereich übereinandergreifend ausgeklinkt, wie dies in der Figur 3 dargestellt ist.

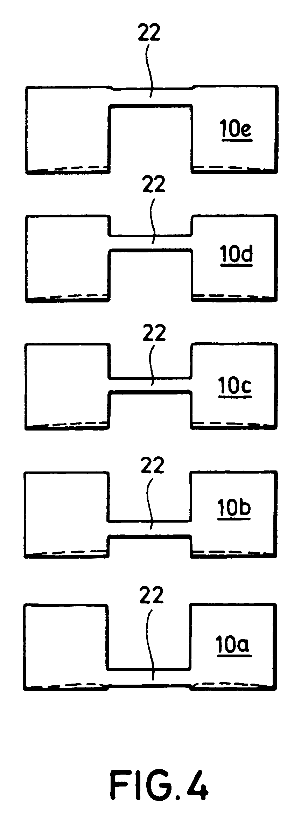

Die Form der Ausklinkung der einzelnen Flügel 10a bis 10e ist in Figur 4 schematisch dargestellt. Bei den Flügeln 10a und 10e ist die Ausklinkung so, daß sich eine U-Form ergibt, die beim Flügel 10a nach oben offen und beim Flügel 10e nach unten offen ist

Bei den Flügeln 10b bis 10d ist der Steg 22 jeweils um ein bestimmtes Maß der Höhe nach versetzt, so daß die Flügel im zusammengesetzten Zustand übereinandergreifen und sich dabei vertikal abstützen.

Die Pumpenflügel 10a bis 10e müssen nicht einstückig ausgebildet sein. Es muß nur dafür gesorgt werden, daß die beiden Wirkenden jedes Pumpenflügels so miteinander verbunden sind, daß ein Druck auf das eine Wirkende durch das Druckstück 17 sich auf das andere Wirkende überträgt

## Patentansprüche

1. Flügelzellenpumpe (3) zum Fördern von pasteusen Massen, insbesondere von Wurstbrät, die aus einem Pumpengehäuse (6) und einem dann exzentrisch angeordneten, in Drehung versetzten Rotor (7) und in diesem radial verschiebbar gelagerten Flügeln (10) besteht, die mit der Wandung (11) des Pumpengehäuses (6) Förderzellen bilden und im abdichtenden Sinne zusammenwirken, wobei auf die Flügel (10) im Druckbereich der Pumpe vor dem Auslaß Druck in radialer Richtung ausgeübt wird, **dadurch gekennzeichnet**,
daß der Radialdruck auf die Flügel (10) im Druckbereich der Pumpe vor dem Auslaß von einem in einer radialen Ausnehmung der Wandung des Pumpengehäuses radial anstellbar gelagerten Druckstück ausgeübt wird, welches mit seiner den Flügeln (10a-10e) zugewandten Fläche (18) die Kontur der Innenwandung (11) des Pumpengehäuses ersetzt und daß ferner die Flügel (10a-10e) radial durchgehend ausgebildet sind.

2. Flügelzellenpumpe nach Anspruch 1,
**dadurch gekennzeichnet**,
daß das Druckstück (17) an seinen sich an die Kontur der Innenwandung (11) des Pumpengehäuses anschließenden Enden mit flachen Fasen versehen ist.

3. Flügelzellenpumpe nach Anspruch 1 oder 2,
**dadurch gekennzeichnet**,
daß sich das Druckstück (17) über einen Bereich von mindestens zwei Flügeln erstreckt.

4. Flügelzellenpumpe nach mindestens einem der Ansprüche 1 bis 3,
**dadurch gekennzeichnet**,
daß die Flügel (10a bis 10e) in ihrem innerhalb des Rotors (7) befindlichen Mittenbereich übereinandergreifend ausgeldinkt sind.

5. Flügelzellenpumpe nach mindestens einem der Ansprüche 1 bis 4, als Bestandteil eines Vakuumfüllers, dessen Fülltrichter-Auslauf mit dem Einlauf des Pumpengehäuses und dessen Auslaufrohr mit dem Auslaß im Pumpengehäuse in Verbindung steht, wobei im Pumpengehäuse eine mit einer Vakuumquelle in Verbindung stehende Vakuumöffnung vorgesehen ist,
**dadurch gekennzeichnet,**
daß die in der Wandung (6) des Pumpengehäuses befindliche Vakuumöffnung (20) im Bereich des Druckstücks (17) angeordnet ist.

## Claims

1. Vane pump (3) for pumping pasty substances, in particular sausage meat, consisting of a pump housing (6) and a rotor (7) which is eccentrically mounted therein and set in rotation and vanes (10) which are mounted radially slidably in the rotor and which form pumping cells and cooperate sealingly with the wall (11) of the pump housing (6), wherein pressure is applied to the vanes (10) in a radial direction in the delivery zone of the pump in front of the outlet, characterised in that the radial pressure on the vanes (10) in the delivery zone of the pump in front of the outlet is applied by a thrust piece which is mounted radially adjustable in a radial recess of the wall of the pump housing and which with its surface (18) facing towards the vanes (10a-10e) replaces the contour of the inner wall (11) of the pump housing and in that furthermore the vanes (10a-10e) are radially continuous.

2. Vane pump according to claim 1, characterised in that the thrust piece (17) is provided with flat chamfers at its ends adjoining the contour of the inner wall (11) of the pump housing.

3. Vane pump according to claim 1 or 2, characterised in that the thrust piece (17) extends over a region of at least two vanes.

4. Vane pump according to one or more of claims 1 to 3, characterised in that the vanes (10a to 10e) are notched in their central region located inside the rotor (7), overlapping each other.

5. Vane pump according to one or more of claims 1 to 4, as part of a vacuum stuffer, of which the feed hopper outlet communicates with the inlet of the pump housing and of which the outlet pipe communicates with the outlet in the pump housing, wherein a vacuum opening communicating with a vacuum source is provided in the pump housing, characterised in that the vacuum opening (20) located in the wall (6) of the pump housing is arranged in the region of the thrust piece (17).

## Revendications

1. Pompe à palettes (3) pour le transport de masses pâteuses, de chair à saucisse notamment, composée d'un corps de pompe (6), d'un rotor (7), excentré dans ce corps et mis en rotation, et de palettes (10), logées avec une possibilité de déplacement radial dans le rotor, formant des cellules de transport avec la paroi (11) du corps de pompe (6), avec laquelle elles concourent dans le sens d'étanchéité, une pression étant exercée dans le sens radial sur les palettes (10) dans la zone de refoulement de la pompe, en amont de la sortie, caractérisée en ce que la pression radiale sur les palettes (10), dans la zone de refoulement de la pompe, en amont de la sortie, est exercée par un membre de pression, logé avec possibilité de serrage radial dans un évidement radial de la paroi du corps de pompe, et qui remplace, par sa surface (18) tournée vers les palettes (10a - 10e), le contour de la paroi interne (11) du corps de pompe, et en ce que les palettes (10a - 10e) ont une réalisation continue dans le sens radial.

2. Pompe à palettes suivant la revendication 1, caractérisée en ce que le membre de pression (17) est muni de chanfreins plats sur ses extrémités, situées dans le prolongement du contour de la paroi interne (11) du corps de pompe.

3. Pompe à palettes suivant l'une des revendications 1 et 2, caractérisée en ce que le membre de pression (17) s'étend sur une zone de deux palettes, au moins.

4. Pompe à palettes suivant l'une quelconque au moins des revendications 1 à 3, caractérisée en ce que les palettes (10a à 10e) sont entaillées et s'imbriquent dans leur zone centrale, située à l'intérieur du rotor (7).

5. Pompe à palettes suivant l'une quelconque au moins des revendications 1 à 4, en tant que composant d'une remplisseuse sous vide, dont la sortie de la trémie d'alimentation communique avec l'entrée du corps de pompe, et dont le tube de décharge communique avec la sortie du corps de pompe, une ouverture à vide, reliée à une source de vide, étant prévue dans le corps de pompe, caractérisée en ce que l'ouverture à vide (20), située dans la paroi (6) du corps de pompe, est disposée dans la zone du membre de pression (17).
